(19) **Europäisches Patentamt / European Patent Office / Office européen des brevets**

(11) **EP 2 978 264 B1**

(12) **EUROPEAN PATENT SPECIFICATION**

(45) Date of publication and mention
of the grant of the patent:
**18.10.2017 Bulletin 2017/42**

(51) Int Cl.:
**H04W 48/20** (2009.01)     **H04W 48/02** (2009.01)

(21) Application number: **15168621.9**

(22) Date of filing: **21.05.2015**

(54) **METHOD OF PERFORMING CELL RESELECTION PROCEDURE IN WIRELESS COMMUNICATION SYSTEM**

VERFAHREN ZUR DURCHFÜHRUNG EINES ZELLNEUAUSWAHLVERFAHRENS IN EINEM DRAHTLOSEN KOMMUNIKATIONSSYSTEM

PROCÉDÉ D'EXÉCUTION D'UNE PROCÉDURE DE RESÉLECTION DE CELLULE DANS UN SYSTÈME DE COMMUNICATION SANS FIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.07.2014 US 201462028792 P**
**18.12.2014 TW 103144372**

(43) Date of publication of application:
**27.01.2016 Bulletin 2016/04**

(73) Proprietor: **Acer Incorporated**
**New Taipei City 221 (TW)**

(72) Inventor: **Ye, Shiang-Rung**
**221 New Taipei City (TW)**

(74) Representative: **Becker Kurig Straus**
**Patentanwälte**
**Bavariastrasse 7**
**80336 München (DE)**

(56) References cited:
**US-A1- 2006 035 662     US-A1- 2010 291 941**

- **Anonymous: "3rd Generation Partnership Project; Technical Specification Group Radio Access Network; Evolved Universal Terrestrial Radio Access (E-UTRA); User Equipment (UE) procedures in idle mode (Release 10)", 3GPP DRAFT; 36304-A80 , 16 March 2014 (2014-03-16), XP050905168, Retrieved from the Internet: URL:http://www.3gpp.org/ftp/Specs/2014-12/ Rel-10/36_series/36304-a80.zip [retrieved on 2014-03-16]**
- **Himke van der Velde: "Control Plane Protocols" In: Stefania Sesia, Issam Toufik and Matthew Baker: "LTE - The UMTS Long Term Evolution: From Theory to Practice, Second Edition.", 29 July 2011 (2011-07-29), John Wiley & Sons, XP002752715, ISBN: 978-0-470-66025-6 pages 57-86, * page 80 - page 84 ***

**Description**

Field of the Invention

The present invention is related to a method of performing cell reselection procedure in wireless communication system when a serving cell becomes barred.

Background of the Invention

The 3rd Generation Partnership Project (3GPP) has developed various wireless communication networks. A universal mobile telecommunications system (UMTS) or a global system for mobile communications edge radio access network (GERAN)is a 3rd generation (3G) network which adopts a wideband code division multiple access (WCDMA) technology capable of providing high frequency spectrum utilization, universal coverage, and high-speed/quality multimedia data transmission. In the UMTS network, a radio access network known as a universal terrestrial radio access network (UTRAN) includes multiple cells, commonly known as Node-Bs (NBs), for communicating with multiple user equipment (UE). A long-term evolution (LTE) system is a 4th generation (4G) network which includes a new radio interface and radio network architecture capable of providing a high data rate, low latency, packet optimization, and improved system capacity and coverage. In the LTE network, a radio access network known as an evolved UTRAN (E-UTRAN) includes multiple evolved NBs (eNBs) for communicating with multiple UEs and a core network which includes a mobility management entity (MME), a serving gateway and other devices for NAS (Non Access Stratum) control.

Prior art US2006035662 discloses a cell reselection method using a first criterion to reselect a second cell, which is applied, in both cases a) when the serving cell is allowed to be reselected and b) when the serving cell is forbidden to be reselected. However, this prior art document does not define a second, more relaxed, cell reselection criterion for reselecting a third cell, to be applied in the specific situation where the serving cell is forbidden to be reselected.

According to 3GPP specifications, after selecting a public land mobile network identity (PLMN), the UE may perform a cell selection procedure and a cell reselection procedure in order to use related network services. The cell selection procedure allows the UE to quickly camp on a serving cell, thereby receiving system information from the PLMN, establishing radio resource control (RRC) links, accessing network via control channels, and receiving/replying paging messages. The cell reselection procedure allows the UE to camp on another target cell having better signal quality than the current serving cell.

After finishing the cell selection procedure, the UE may continuously receive system information from the serving cell, thereby acquiring cell reselection criteria, a list of frequency/radio access technology (RAT) and status information, based on which it may be determined if another target cell having better signal quality exists. Whether the cell reselection procedure should be performed may be determined according to the evaluations on Intra-frequency reselection and Inter-frequency reselection which adopt different parameters as the cell reselection criteria. The evaluation on Intra-frequency reselection uses cell signal strength as a judging condition. If the signal strength of an Intra-frequency target cell remains stronger than the signal strength of an Intra-frequency serving cell longer than a reselection timer value $Treselection_{RAT}$, the UE may handover to camp on the target cell by performing the cell reselection procedure.

Each frequency/RAT in the frequency/RAT list is prioritized, and the evaluation on Inter-frequency reselection uses cell signal strength and reselection priority as judging conditions. If the signal strength of a high-priority Intra-frequency target cell remains larger than a first threshold value longer than the reselection timer value $Treselection_{RAT}$, the UE may handover to camp on the target cell by performing the cell reselection procedure. If the signal strength of a low-priority Intra-frequency target cell remains larger than a second threshold value longer than the reselection timer value $Treselection_{RAT}$ and the signal strength of the serving cell remains smaller than a third threshold value longer than the reselection timer value $Treselection_{RAT}$, the UE may handover to camp on the target cell by performing the cell reselection procedure. The same-priority Inter-frequency cell reselection may be performed in the same manner as the Intra-frequency cell reselection.

According to related 3GPP specifications (such as TS 36.304 version 12.1.0), the cells in a wireless communication system may be categorized as suitable cells, acceptable cells, barred cells or reserved cells according to service limitations. The UE may acquire the types of the cells from the status information of a system information block 3 (SIB3) or a system information block 4 (SIB4). According to related 3GPP specifications (such as TS 36.304 version 12.1.0), the UE is not allowed to camp on a barred cell or on a reserved cell. Therefore, the cell selection procedure and the cell reselection procedure can only be performed on suitable cells or acceptable cells. However, although a serving cell selected by a specific UE during a previous cell selection procedure was a suitable cell or an acceptable cell, the network may somehow set the serving cell as a barred cell or a reserved cell when the UE is currently camping on the serving cell. After that, all other UEs are forbidden to camp on the barred serving cell of the specific UE. Setting the serving cell as a suitable cell, an acceptable cell, a barred cell or a reserved cell does not influence the signal strength of the serving cell. When the UE detects another low-priority Intra-frequency, the signal strength of the serving cell may always remain larger than the third threshold value even if the signal strength of the low-priority Intra-frequency target cell remains larger than the second threshold value longer than the reselection timer value Treselection$_{RA}$. Under such circumstance when the serving cell becomes a barred cell, the prior art UE may not be able to handover to camp on the target cell by performing the cell reselection procedure. Therefore, there is a need for a method of performing cell reselection procedure in wireless communication system when a serving cell becomes barred.

Summary of the Invention

The present invention aims at providing a method of performing cell reselection procedure in wireless communication system when a serving cell becomes barred.

This is achieved by a method of performing a cell reselection procedure in a wireless communication system which includes a user equipment and a plurality of cells according to claim 1 and a wireless communication system configured to perform a cell reselection procedure according to claim 10. The dependent claims pertain to corresponding further developments and improvements.

As will be seen more clearly from the detailed description following below, the claimed method performs a cell reselection procedure in a wireless communication system which includes a user equipment and a plurality of cells. The method includes the user equipment camping on a first cell among the plurality of cells; the user equipment evaluating if the plurality of cells includes a second cell which satisfies a first cell reselection criterion when camping on the first cell if it is determined that the first cell is allowed to be selected in the cell reselection procedure or in a cell selection procedure; the user equipment evaluating if the plurality of cells includes a third cell which satisfies a second cell reselection criterion when camping on the first cell if it is determined that the first cell is forbidden to be selected in the cell reselection procedure or in the cell selection procedure. The first cell reselection criterion includes at least one first judging condition for determining if the second cell satisfies the first cell reselection criterion. The second cell reselection criterion includes at least one second judging condition for determining if the third cell satisfies the second cell reselection criterion. The at least one second judging condition is less strict than the at least one first judging condition.

Brief Description of the Drawings

In the following, the invention is further illustrated by way of example, taking reference to the accompanying drawings.

The FIGURE is a flowchart illustrating a method of performing cell reselection procedure in a wireless communication system according to an embodiment of the present invention.

Detailed Description

The present method of performing cell reselection procedure may be applied to a wireless communication system which includes a UE and a plurality of cells. Each cell may be an NB of a UTRAN, an e-NB of a EUTRAN, or a base station of another type of network. The UE may include any device with telecommunication capabilities, such as mobile phones, personal digital assistants, handheld computers, tablet computers, nettop computers, or laptop computers. However, the types of the cells and the UE do not limit the scope of the present invention.

The FIGURE is a flowchart illustrating a method of performing cell reselection procedure in a wireless communication system according to an embodiment of the present invention. The method in The FIGURE includes the following steps:

Step 110:  the UE selects a first cell from the plurality of cells as a serving cell by performing a cell selection procedure; execute step 120.

Step 120:  the UE camps on the first cell and receives system information from the first cell; execute step 130.

Step 130:  the UE provides a first cell reselection criterion according to the system information; execute step 140.

Step 140:  the UE determines if the serving cell is forbidden to be selected in the cell selection procedure or in the cell reselection procedure according to the system information; if yes, execute step 160; if no, execute step 150.

Step 150:  the UE evaluates if the plurality of cells includes a second cell which satisfies the first reselection criterion; if yes, execute step 180; if no, execute step 120.

Step 160:  the UE provides a second cell reselection criterion associated with the first cell reselection criterion, wherein the judging conditions of the second cell reselection criterion are less strict than the judging conditions of the first cell reselection criterion; execute step 170.

(continued)

| | |
|---|---|
| Step 170: | the UE evaluates if the plurality of cells includes a second cell which satisfies the second reselection criterion; if yes, execute step 180; if no, execute step 170. |
| Step 180: | the UE selects the second cell as the serving cell by performing the cell reselection procedure; execute step 120. |

According to related 3GPP specifications (such as TS 36.304 version 12.1.0), the cell selection procedure includes two stages: target cell decision and serving cell decision. During the first stage of target cell decision, the UE may select the target cell according its PLMN identification list, stored cell information or the list of scanned neighboring cells. If all scanned neighboring cells are not included in the UE's PLMN identification list or no smart card is inserted, the UE is configured to select the target cell based on signal strength. After selecting the target cell, the UE may start to receive the system information from the target cell and process the system information. The system information may include parameters ($Q_{rxlevmeas}$, $Q_{qualmeas}$, $Q_{rxlevmin}$, $Q_{qualmin}$, $Q_{rxlevminoffset}$, $Q_{qualminoffset}$, $P_{compensation}$) or threshold values ($Thresh_{Serving, LowQ}$, $Thresh_{Serving, LowP}$, $Thresh_{X, LowQ}$, $Thresh_{X, LowQ}$). Based on these parameters and threshold values, the UE may calculate the parameters of Srxlev and Squal, and acquire corresponding cell selection/reselection criteria. Srxlev represents a cell selection RX level value, and Squal represents a cell selection quality value. $Q_{rxlevmeas}$ represents a measured cell RX level value or a reference signal receiving power (RSRP). $Q_{qualmeas}$ represents a measured cell quality value or a reference signal receiving quality (RSRQ). $Q_{rxlevmin}$ represents a minimum required RX level in the cell. $Q_{qualmin}$ represents a minimum required quality level in the cell. $Q_{rxlevminoffset}$ represents an offset taken into account in the Srxlev evaluation as a result of a periodic search for a higher priority PLMN. $Q_{qualminoffset}$ represents an offset taken into account in the Squal evaluation as a result of a periodic search for a higher priority PLMN. $P_{compensation}$ represents the larger one among ($P_{EMAX}$-$P_{PowerClass}$) and 0, wherein $P_{EMAX}$ represents the maximum transmission power of the UE and $P_{PowerClass}$ represents the maximum radio frequency output power of the UE. $Thresh_{Serving, LowQ}$ and $Thresh_{Serving, LowP}$ represent low threshold values required for evaluating reselection of the serving frequency. $Thresh_{X, LowQ}$ and $Thresh_{X, LowP}$ represent threshold values required for reselecting low-priority frequency.

The decibel (dB) is the unit of Srxlev and Squal which are represented by the following equations:

$$Srxlev = Q_{rxlevmeas} - (Q_{rxlevmin} + Q_{rxlevminoffset}) - P_{compensation} \quad \ldots(1)$$

$$Squal = Q_{qualmeas} - (Q_{qualmin} + Q_{qualminoffset}) \ldots(2)$$

During the second stage of serving cell decision, the UE may determine if the target cell is a suitable cell based on the cell selection criteria which are included in the system information provided by the target cell. The cell selection criteria include judging conditions associated with signal receiving threshold (such as Srxlev and/or Squal) and status information indicated in the system information. The following equation (3) represents a cell selection criterion S1 used for frequency division duplex (FDD) structure. The following equation (4) represents a cell selection criterion S2 used for time division duplex (TDD) structure.

$$S1: Srxlev > 0 \text{ and } Squal > 0 \quad \ldots(3)$$

$$S2: Srxlev > 0 \quad \ldots(4)$$

For illustrative purpose, it is assumed that the first cell is selected in the first stage, the signal strength of the first cell is determined to be larger than a signal receiving threshold (such as when the cell selection criterion S1 or S2 is satisfied) in the second stage, and the first cell is allowed to be selected in the cell selection procedure or in the cell reselection procedure according to the status information. Under such circumstance, the UE may select the first cell as the serving cell in step 110.

In step 120, the UE may camp on the first cell and receives system information from the first cell and continuously receive cell reselection criteria, frequency list and status information from the serving cell, thereby performing the evaluation of the cell reselection procedure accordingly.

According to the cell reselection criteria defined in related 3GPP specifications (such as TS 36.304 version 12.1.0), the following equations (5)-(7) illustrate cell reselection criteria R1-R3 used for low-priority Inter-frequency under various structure.

R1: serving cell's Squal $<\mathrm{Thresh}_{\mathrm{Serving,\ LowQ}}$; and

$$\text{target cell's Squal} > \mathrm{Thresh}_{X,\ \mathrm{LowQ}} \qquad \ldots(5)$$

R2: serving cell's Squal $<\mathrm{Thresh}_{\mathrm{Serving,\ LowQ}}$; and

$$\text{target cell's Srxlev} > \mathrm{Thresh}_{X,\ \mathrm{LowP}} \qquad \ldots(6)$$

R3: serving cell's Srxlev $<\mathrm{Thresh}_{\mathrm{Serving,\ LowP}}$; and

$$\text{target cell's Srxlev} > \mathrm{Thresh}_{X,\ \mathrm{LowP}} \qquad \ldots(7)$$

In step 130, the first cell reselection criterion provided by the UE may be any of the cell reselection criteria R1-R3. If the threshold value $\mathrm{Thresh}_{\mathrm{Serving,\ LowQ}}$ is included in the SIB3 broadcast by the serving cell, the UE may perform cell reselection evaluation on the RAT/frequency of a low-priority EUTRAN or a low-priority UTRAN FDD using the cell reselection criterion R1, or perform the cell reselection evaluation on the RAT/frequency of a low-priority UTRAN TDD, a low-priority Global System for Mobile Communications Enhanced Data rates for GSM Evolution Radio Access Network (GERAN), or a low-priority Code Division Multiple Access (CDMA) 200. If the threshold value $\mathrm{Thresh}_{\mathrm{Serving,\ LowQ}}$ is not included in the SIB3 broadcast by the serving cell, the UE may perform cell reselection evaluation on a low-priority RAT/frequency using the cell reselection criterion R3. However, the types and execution of the first cell reselection criterion do not limit the scope of the present invention.

As previously illustrated, although the UE is allowed to select the first cell as the serving cell in step 110, the network may somehow change the status information of the first cell while the UE is camping on the first cell. For example, the status information indicated in SIB3 or SIB4 broadcast by the first cell includes information elements (IE) of "cell barred", "cell reserved for operator use" and "cell reservation on extension". The IE type of "cell barred" may be set in a "barred" state or a " not barred" state. The IE type of "Cell reserved for operator use" and "cell reservation on extension" may be set in a "reserved" state or in a "not reserved" state. If the network allows the first cell to provide normal service, the above-mentioned IEs may be set in the "not barred" state or in the "not reserved" state; if the network does not want any UE to camp on the first cell, the above-mentioned IEs may be set in the "barred" state or in the "reserved" state.

If the UE determines that the serving cell is not forbidden to be selected in the cell selection procedure or in the cell reselection procedure according to the system information in step 140, step 150 is then executed for evaluating if the plurality of cells includes the second cell which satisfies the first reselection criterion. If the second cell exists, step 180 is then executed for selecting the second cell as the serving cell by performing the cell reselection procedure. If the UE determines that the serving cell is forbidden to be selected in the cell selection procedure or in the cell reselection procedure according to the system information in step 140, step 160 is then executed.

In step 160, the UE may provide the second cell reselection criterion associated with the first cell reselection criterion, wherein the judging conditions of the second cell reselection criterion are less strict than the judging conditions of the first cell reselection criterion. In an embodiment, the second cell reselection criterion provided in step 160 may be any of the following cell reselection criteria A1-A3, as represented by equations (8)-(10). Each cell reselection criterion is deemed satisfied when all judging conditions hold true longer than the reselection timer value $\mathrm{Treselection}_{\mathrm{RAT}}$.

$$\text{A1: target cell's Squal} > \mathrm{Thresh}_{X,\ \mathrm{LowQ}} \qquad \ldots(8)$$

$$\text{A2: target cell's Srxlev} > \mathrm{Thresh}_{X,\ \mathrm{LowP}} \qquad \ldots(9)$$

$$\text{A3: target cell's Srxlev} > \mathrm{Thresh}_{X,\ \mathrm{LowP}} \qquad \ldots(10)$$

In another embodiment, the second cell reselection criterion provided in step 160 may be any of the following cell reselection criteria B1-B3, as represented by equations (11)-(13). Each cell reselection criterion is deemed satisfied when all judging conditions hold true longer than the reselection timer value $\text{Treselection}_{RAT}$.

$$B1: \quad \text{serving cell's Squal} < MAX1; \text{ and}$$

$$\text{target cell's Squal} > \text{Thresh}_{X, LowQ} \dots (11)$$

$$B2: \text{serving cell's Squal} < MAX1; \text{ and}$$

$$\text{target cell's Srxlev} > \text{Thresh}_{X, LowP} \dots (12)$$

$$B3: \text{serving cell's Srxlev} < MAX2; \text{ and}$$

$$\text{target cell's Srxlev} > \text{Thresh}_{X, LowP} \dots (13)$$

If it is determined in step 140 that the serving cell is forbidden to be selected in the cell selection procedure or in the cell reselection procedure, the UE may evaluate if the plurality of cells includes the second cell which satisfies the second reselection criterion step 160. If the second cell reselection criterion provided is one of the cell reselection criteria A1-A3, Squal or Srxlev of the serving cell is ignored during the reselection evaluation of low-priority RAT/frequency. In other words, the judging conditions for determining if the cell reselection criteria A1-A3 are satisfied are less strict than the judging conditions for determining if the cell reselection criteria R1-R3 are satisfied. Therefore, even if the Squal of the barred serving cell is larger than $\text{Thresh}_{Serving, LowQ}$ or the Srxlev of the barred serving cell is larger than $\text{Thresh}_{Serving, LowP}$, the UE may still perform the cell reselection procedure for selecting the second cell as the serving cell in step 180 as long as the second cell satisfies $\text{Squal} > \text{Thresh}_{X, LowQ}$ or $\text{Srxlev} > \text{Thresh}_{X, LowP}$.

If the second cell reselection criterion provided is one of the cell reselection criteria B1-B3, a threshold value MAX1 or MAX2 is used during the reselection evaluation of low-priority RAT/frequency, wherein $MAX1 > \text{Thresh}_{X, LowQ}$ and $MAX2 > \text{Thresh}_{X, LowP}$. In other words, the judging conditions for determining if the cell reselection criteria B1-B3 are satisfied are less strict than the judging conditions for determining if the cell reselection criteria R1-R3 are satisfied. Therefore, when the second cell satisfies $\text{Squal} > \text{Thresh}_{X, LowQ}$ or $\text{Srxlev} > \text{Thresh}_{X, LowP}$, it is easier for the serving cell to satisfy $\text{Squal} < MAX1$ or $\text{Srxlev} < MAX2$ so that the UE may perform the cell reselection procedure for selecting the second cell as the serving cell in step 180.

After a UE selects a suitable cell or an acceptable cell as the serving cell, the network may somehow set the serving cell as a barred cell or a reserved cell when the UE is currently camping on the serving cell. In the cell reselection method according to the present invention, the UE may adopt cell reselection criteria with less strict judging conditions for determining if the cell reselection procedure should be perform. Therefore, the present invention can enhance the chance for the UE currently camping on a barred serving cell to handover to another suitable cell or acceptable cell, thereby improving communication quality.

**Claims**

1. A method of performing a cell reselection procedure in a wireless communication system which includes a user equipment and a plurality of cells, the method comprising:

the user equipment camping on a first cell among the plurality of cells (110);
the user equipment receiving system information containing a plurality of parameters and a plurality of threshold values from the first cell when camping on the first cell (120);
the user equipment acquiring a first cell selection quality value, Squal, associated with the first cell, a second Squal associated with the second cell, and a third Squal associated with the third cell according to the plurality of parameters which include a measured cell quality value, a minimum required quality level in a cell, and an offset taken into account in a Squal evaluation as a result of a periodic search for a higher priority public land mobile network identity;

the user equipment evaluating if the plurality of cells includes a second cell which satisfies a first cell reselection criterion (150) when camping on the first cell if it is determined that the first cell is allowed to be selected in the cell reselection procedure or in a cell selection procedure (140); the method **characterized by**:

the user equipment evaluating if the plurality of cells includes a third cell which satisfies a second cell reselection criterion (160) when camping on the first cell if it is determined that the first cell is forbidden to be selected in the cell reselection procedure or in the cell selection procedure (140);
the user equipment determining that the second cell satisfies the first cell reselection criterion when the first Squal remains smaller than a first threshold value and the second Squal remains larger than a second threshold value longer than a predetermined period of time (170);
the user equipment determining that the third cell satisfies the second cell reselection criterion when the first Squal remains smaller than a third threshold value and the third Squal remains larger than the second threshold value longer than the predetermined period of time, wherein the third threshold value is larger than the first threshold value.

2.  The method of claim 1, **characterized by** the further step of:

the user equipment determining if the first cell is forbidden to be selected in the cell reselection procedure or in the cell selection procedure according to status information indicated in the system information.

3.  The method of claim 2, **characterized in that**:

the system information includes a "cell barred" information element, a "cell reserved for operator use" information element, and a "cell reservation on extension" information element;
the user equipment determines that the first cell is forbidden to be selected in the cell reselection procedure or in the cell selection procedure when one of the "cell barred" information element, the "cell reserved for operator use" information element, and the "cell reservation on extension" information element is set in a "barred" state or in a "reserved" state; and
the user equipment determines that the first cell is allowed to be selected in the cell reselection procedure or in the cell selection procedure when all of the "cell barred" information element, the "cell reserved for operator use" information element, and the "cell reservation on extension" information element are set in a "not barred" state or in a "not reserved" state.

4.  The method of claim 1, **further characterized in that**:

the user equipment determines that the third cell satisfies the second cell reselection criterion when the third Squal remains larger than the second threshold value longer than the predetermined period of time regardless of a value of the first Squal over the predetermined period of time.

5.  A wireless communication system comprising means for performing a cell reselection procedure according to any of claims 1-4.

**Patentansprüche**

1.  Verfahren zur Durchführung eines Zellen-Neuauswahlverfahrens in einem Drahtlos-Kommunikationssystem, welches ein Endgerät und mehrere Zellen beinhaltet, wobei das Verfahren umfasst:

die Endgeräte befinden sich in einer ersten Zelle unter den mehreren Zellen (110);
das Endgerät erhält, wenn es sich in der ersten Zelle (120) befindet, Systeminformationen, welche mehrere Parameter und mehrere Grenzwerte von der ersten Zelle enthält;
das Endgerät erwirbt einen ersten Zell-Auswahl-Quaitätswert, Squal, der mit der ersten Zelle assoziiert ist, einen zweiten Squal, der mit der zweiten Zelle assoziiert ist, und einen dritten Squal, der mit der dritten Zelle assoziiert ist, gemäß den mehreren Parametern, welche ein bestimmtes Zellen-Qualitätsniveau, ein minimal erforderliches Qualitäts-Niveau in einer Zelle, und einen Ausgleich, der bei der Squal-Bewertung als Ergebnis einer regelmäßigen Suche nach einer Public Land Mobile Netzwerkidentität mit höherer Priorität berücksichtigt wird, beinhalten;
das Endgerät bewertet, wenn es sich in der ersten Zelle befindet und wenn bestimmt wird, dass die erste Zelle in dem Zell-Neuauswahlverfahren oder einem Zell-Auswahlverfahren ausgewählt werden soll, ob die mehreren Zellen eine zweite Zelle beinhalten, die den Neuauswahl-Kriterium der ersten Zelle genügt;

wobei das Verfahren **gekennzeichnet ist durch**:

das Endgerät bewertet, wenn es sich in der ersten Zelle befindet und wenn in dem Zell-Neuauswahlverfahren (140) oder dem Zell-Auswahlverfahren (140) bestimmt wird, dass die erste Zelle nicht gewählt werden darf, ob die mehreren Zellen eine dritte Zelle beinhalten, die einem Neuauswahl-Kriterium (160) einer zweiten Zelle genügt;

das Endgerät bestimmt, dass die zweite Zelle dem ersten Zell-Neuauswahl-Kriterium genügt, wenn für länger als eine bestimmte Zeitspanne (170) der erste Squal kleiner bleibt als ein erster Grenzwert und der zweite Squal größer bleibt als ein zweiter Grenzwert;

das Endgerät bestimmt, dass die dritte Zelle dem Neuauswahl-Kriterium der zweiten Zelle genügt, wenn für länger als eine bestimmte Zeitspanne der erste Squal kleiner bleibt als ein dritter Grenzwert und der dritte Squal größer bleibt als der zweite Grenzwert, worin der dritte Grenzwert größer ist als der erste Grenzwert.

2. Verfahren nach Anspruch 1, **gekennzeichnet durch** den weiteren Schritt:

das Endgerät bestimmt, ob die erste Zelle in dem Zell-Neuauswahlverfahren oder dem Zell-Auswahlverfahren nicht ausgewählt werden darf, gemäß der in den System-Informationen angezeigten Status-Information.

3. Verfahren nach Anspruch 2, **dadurch gekennzeichnet, dass**:

die System-Information beinhaltet ein "Zelle-gesperrt" Informationselement, ein "Zelle reserviert zur Anwendung durch den Nutzer " Informationselement, und ein "Zellen-Reservierung bei Verlängerung" Informationselement;

das Endgerät bestimmt, dass die erste Zelle in dem Zell-Neuauswahlverfahren oder dem Zell-Auswahlverfahren nicht gewählt werden soll, wenn eines des "Zelle-gesperrt" Informationselements, des "Zelle reserviert zur Anwendung durch den Nutzer" Informationselements, und des "Zellen-Reservierung bei Verlängerung" Informationselements in einen "gesperrt Status" oder in einen "reservierten Status" gesetzt wird; und

das Endgerät bestimmt, dass die erste Zelle in dem Zell-Neuauswahlverfahren oder dem Zell-Auswahlverfahren gewählt werden darf, wenn alle des "Zelle gesperrt" Informationselements, des "Zelle reserviert zur Anwendung durch den Nutzer" Informationselements, und des "Zellen-Reservierung bei Verlängerung" Informationselements nicht in den "gesperrte Status" oder in einen "reservierten Status" gesetzt werden.

4. Verfahren nach Anspruch 1, weiter **dadurch gekennzeichnet, dass**:

das Endgerät bestimmt, dass die dritten Zelle dem Neuauswahl-Kriterium der zweiten Zelle genügt, wenn der dritte Squal für länger als eine bestimmte Zeitspanne größer bleibt als der zweite Grenzwert unbeachtlich eines Werts des ersten Squal über die bestimmte Zeitspanne.

5. Drahtlos-Kommunikationssystem, welches Mittel umfasst, um ein Zell-Neuauswahlverfahren nach einem der Ansprüche 1-4 durchzuführen.

**Revendications**

1. Procédé de réalisation d'une procédure de resélection de cellules dans un système de communication sans fil qui comprend un équipement utilisateur et une pluralité de cellules, le procédé comprenant :

l'équipement utilisateur se trouvant sur une première cellule parmi la pluralité de cellules (110);

l'équipement utilisateur recevant des informations de système contenant une pluralité de paramètres et une pluralité de valeurs seuil provenant de la première cellule lorsqu'il se trouve sur la première cellule (120) ;

l'équipement utilisateur acquérant une première valeur de qualité de sélection de cellules, Squal, associée à la première cellule, un second Squal associé à la seconde cellule; et un troisième Squal associé à la troisième cellule selon la pluralité de paramètres qui comprennent une valeur de qualité de cellule mesurée, un niveau de qualité requis minimal dans une cellule, et un décalage pris en compte dans une évaluation Squal en résultat d'une recherche périodique pour une identité de réseau mobile terrestre public de priorité plus élevée ;

l'équipement utilisateur évaluant si la pluralité de cellules comprend une seconde cellule qui satisfait un premier critère de resélection de cellule (150) lorsqu'il se trouve sur la première cellule s'il est déterminé que la première cellule est autorisée à être sélectionnée dans la procédure de resélection de cellules ou dans une procédure de sélection de cellules (140) le procédé étant **caractérisé par** :

l'équipement utilisateur évaluant si la pluralité de cellules comprend une troisième cellule qui satisfait un deuxième critère de resélection de cellules (160) lorsqu'il se trouve sur la première cellule s'il est déterminé que la sélection de la première cellule est interdite dans la procédure de resélection de cellules ou dans la procédure de sélection de cellules (140) ;

l'équipement utilisateur déterminant que la seconde cellule satisfait le premier critère de resélection de cellules lorsque le premier Squal reste inférieur à une première valeur seuil et que le second Squal reste supérieur à une seconde valeur seuil plus longue qu'une période de temps prédéterminée (170),

l'équipement utilisateur déterminant que la troisième cellule satisfait le deuxième critère de resélection de cellules lorsque le premier Squal reste inférieur à une troisième valeur seuil et que le troisième Squal reste supérieur à la seconde valeur seuil plus longue que la période de temps prédéterminée, la troisième valeur seuil étant supérieure à la première valeur seuil.

2. Procédé selon la revendication 1, **caractérisé par** l'étape supplémentaire suivante :

l'équipement utilisateur déterminant si la sélection de la première cellule est interdite dans la procédure de resélection de cellules ou dans la procédure de sélection de cellules selon des informations d'état indiquées dans les informations de système.

3. Procédé selon la revendication 2, **caractérisé en ce que** :

les informations de système comprennent un élément d'information d'"interdiction de cellule", un élément d'information de "cellule réservée à l'usage de l'opérateur" et un élément d'information de "réservation de cellule sur l'extension" ;

l'équipement utilisateur déterminant que la sélection de la première cellule est interdite dans la procédure de resélection de cellules ou dans la procédure de sélection de cellules, lorsque l'un des éléments d'information d'"interdiction de cellule", l'élément d'information de "cellule réservée à l'usage de l'opérateur" et l'élément d'information de "réservation de cellule sur l'extension" est réglé dans un état "interdit" ou dans un état "réservé" ; et

l'équipement utilisateur déterminant que la première cellule est autorisée à être sélectionnée dans la procédure de resélection de cellules ou dans la procédure de sélection de cellules lorsque l'ensemble des éléments d'information d'"interdiction de cellule", l'élément d'information de "cellule réservée à l'usage de l'opérateur" et l'élément d'information de "réservation de cellule sur l'extension" sont réglés dans un état "non interdit" ou dans un état "non réservé".

4. Procédé selon la revendication 1, **caractérisé en outre en ce que** :

l'équipement utilisateur détermine que la troisième cellule satisfait le second critère de resélection de cellule lorsque le troisième Squal reste supérieur à la seconde valeur seuil plus longue que la période de temps prédéterminée indépendamment d'une valeur du premier Squal sur la période de temps prédéterminée.

5. Système de communication sans fil comprenant un moyen pour effectuer une procédure de resélection de cellules selon l'une quelconque des revendications 1-4.

```
┌─────────────────────────┐
│ UE selects a first cell as a │   110
│ serving cell by performing   │
│ a cell selection procedure   │
└─────────────────────────┘
             │
             ▼
┌─────────────────────────┐
│ UE camps on the first cell │   120
│ and receives system        │
│ information from the first cell │
└─────────────────────────┘
             │
             ▼
┌─────────────────────────┐
│ UE provides a first cell   │   130
│ reselection criterion according │
│ to the system information  │
└─────────────────────────┘
```

140

Serving cell
is forbidden to be selected in cell
selection /reselection
procedure?

Yes

┌─────────────────────────┐
│ UE provides a second │   160
│ cell reselection     │
│ criterion associated │
│ with the first cell  │
│ reselection criterion │
└─────────────────────────┘

No

150

UE
evaluates if the
plurality of cells includes a
second cell which satisfies
the first reselection
criterion?

No

170

UE
evaluates if the
plurality of cells includes
a second cell which satisfies
the second reselection
criterion?

No

Yes

Yes

180

┌─────────────────────────┐
│ UE selects the second cell │
│ as the serving cell by     │
│ performing the cell        │
│ reselection procedure      │
└─────────────────────────┘

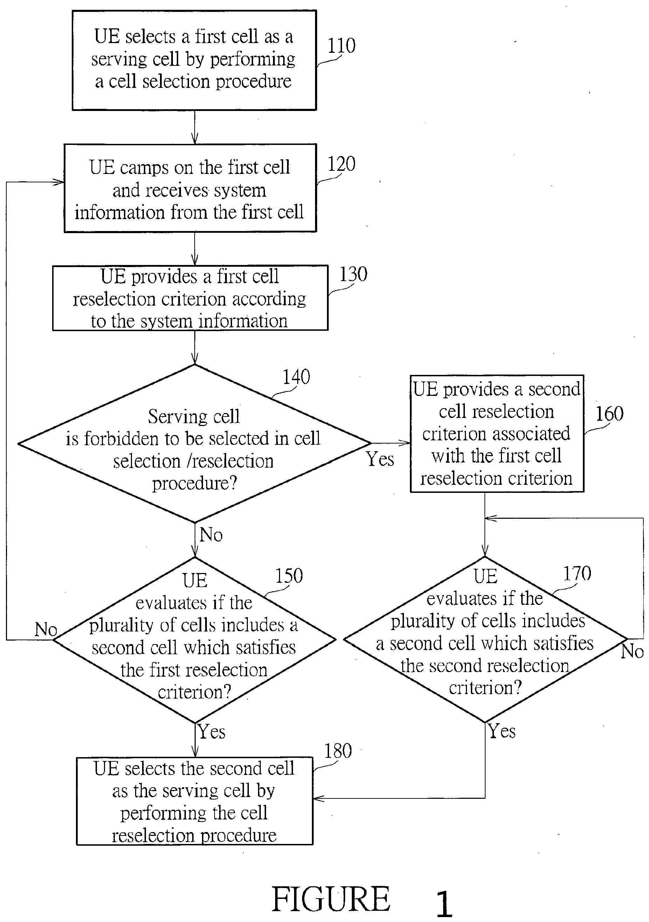

## FIGURE 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2006035662 A